(19) Europäisches Patentamt

European Patent Office

Office européen des brevets

(11) EP 1 048 490 A2

(12) EUROPEAN PATENT APPLICATION

(43) Date of publication:
02.11.2000 Bulletin 2000/44

(51) Int. Cl.⁷: B60C 17/02

(21) Application number: 00303526.8

(22) Date of filing: 27.04.2000

(84) Designated Contracting States:
AT BE CH CY DE DK ES FI FR GB GR IE IT LI LU MC NL PT SE
Designated Extension States:
AL LT LV MK RO SI

(30) Priority: 27.04.1999 JP 11934599

(71) Applicant:
BRIDGESTONE CORPORATION
Tokyo 104-0031 (JP)

(72) Inventor: Kasuya, Tatsuo
Tokyo, 167-0022 (JP)

(74) Representative: Whalley, Kevin
MARKS & CLERK,
57-60 Lincoln's Inn Fields
London WC2A 3LS (GB)

(54) **Safety pneumatic tire**

(57) There is provided a safety pneumatic tire, which is simple in construction and economical in manufacturing, is formed of an inexpensive material, does not impair good fuel efficiency of a vehicle having the tire mounted therein, and performs an excellent function as a safety tire. The safety pneumatic tire includes a tubeless tire 1 having a tread 2 annularly formed, a pair of side walls 3 each disposed over an area from an end of the tread to a radially internal portion of the tire, and bead portions 4 each being adjacent to the side wall and buried at a radially internal end portion of the tire, and a rim 6 in which the tubeless tire 1 is installed. The safety pneumatic tire is comprised of at least one tube 5 built into the tubeless tire, and a space portion is formed in the tubeless tire and defined by an external surface of the tube 5 and an internal wall of a crown portion of the tubeless tire 1, when air is fully charged.

Fig.1

EP 1 048 490 A2

Printed by Xerox (UK) Business Services
2.16.7 (HRS)/3.6

**Description**

The present invention relates to a safety pneumatic tire, which can continue to travel even after a tire blowout occurs.

Conventionally, various types of safety tires or run flat tires have been studied and developed, which can continue to travel a predetermined distance even after a tire blowout occurs. Such known tires include, for instance, a run-flat tire having a tube with some contrivance, such as a reinforced tube, a multi-chamber tube, a filled tube, and a folding tube. In addition, a sealant-coated tire, a filled tire, or a core-including type tire are also known. Further, in recent years, a safety tire having a built-in tube with a belt reinforced layer provided inside the tire has been disclosed, for example, in JP-A 6-336103. Further, another safety tire having a double structure obtained by inserting an internal tire into an external tire which is slightly larger than the former, has been disclosed, for example, in JP-A 7-276931.

However, many of the conventional safety tires are manufactured through a special method or include an auxiliary member formed of a special material, which renders it difficult to manufacture the same. Further, they are inconvenient when installed and/or handled. In practice, for example, it is very difficult to manufacture the multi-chamber tube which is one of the tube-improved type safety tires, and therefore it can be unrealistic. On the other hand, in the sealant-coated tire or the filled tire, it is difficult to charge a sealant, or to develop a material of the sealant, and the core including type tire is inconvenient when installed. Further, mousse type safety tires, such as a sponge-filled tire or an elastic material-filled tire are also difficult in manufacturing as well as in shape controlling and stabilization.

Still further, the safety tire disclosed in JP-A 6-336103 uses an internal tube with a belt layer or the safety tire disclosed in JP-A 7-276931 has the double structure, and therefore the tire becomes heavier by the weight of the contrived portion, resulting in poor fuel-efficiency of a vehicle having the tire mounted therein.

It is therefor an object of the present invention to provide a safety pneumatic tire which is simple in construction and economical in manufacturing, is formed of an inexpensive material, does not impair good fuel efficiency of a vehicle having the tire mounted therein, and performs an excellent function as a safety tire.

To attain the object, the present invention provides a safety pneumatic tire including a tubeless tire having a tread annularly formed, a pair of side walls each disposed over an area from an end of the tread to a radially internal portion of the tire, and bead portions each being adjacent to the side wall and buried at a radially internal end portion of the tire, and a rim in which the tubeless tire is installed, which comprising at least one tube built into the tubeless tire, a space portion being formed in the tubeless tire and defined by an external surface of the tube and an internal wall of a crown portion of the tubeless tire, when air is fully charged. By virtue of this construction, when the tire blows, a balance between an internal pressure of the tube and an internal pressure of the tubeless tire is lost, which allows the tube to be inflated. As a result, the shape of the tire can be maintained.

Preferably, in the safety pneumatic tire mentioned above, air is charged into the tube and the space portion such that a pneumatic pressure within the tube and a pneumatic pressure within the space portion assume substantially close values (e.g. ± 300 kPa or less) to each other. Under normal conditions, the pneumatic pressures within the tube and the space portion assume the substantially close values to keep the balance. On the other hand, when the tire blows, the balance is lost, which allows the tube to be inflated so as to fit the internal surface of the tire. As a result, the shape of the tire is maintained in a good condition.

Preferably, in the safety pneumatic tire, the rim used has a plurality of valve openings formed therein, comprising a valve opening for the tube and a valve opening for the tubeless tire. Charging operations of air into the tube and the tubeless tire are carried out through the different valves. As a result, the internal pressures can be individually controlled in a suitable manner.

More preferably, in the safety pneumatic tire, the valve opening for the tube includes a valve installing structure with hermeticity. By virtue of this structure, air leakage can be sufficiently prevented.

Alternatively, in the safety pneumatic tire, the rim used has only a valve opening for the tube, the tube having therein a pressure regulating valve communicating with the space portion. As a result, air can be automatically charged into the tubeless tire. The pressure regulating valve is preferably of a construction which incorporates therein a function of automatically closing the valve when the pressure within the tubeless tire drops to a predetermined value.

Preferably, in the safety pneumatic tire, a radially cross-sectional height $\underline{h}$ of the tube and a radially cross-sectional height $\underline{H}$ of the tubeless tire are set in a relationship represented by the following expression, when air is fully charged in the tubeless tire:

$$1/3 < h/H < 4/5.$$

By virtue of this relationship, the space portion can be maintained while constituting a suitable volume.

These and other objects and advantages of the present invention will become clear from the following description with reference to the accompanying drawings, wherein:

Fig. 1 is a cross-sectional view schematically showing the construction of a safety pneumatic tire, according to an embodiment of the invention,

Fig. 2 is a cross-sectional view schematically showing the construction of the tire shown in Fig. 1, which is in a blowout state;

Fig. 3 is a cross-sectional view schematically showing the construction of a safety pneumatic tire, according to further embodiment of the invention, and

Fig. 4 is a cross-sectional view schematically showing the construction of a safety pneumatic tire, according to still further embodiment of the invention.

The invention will now be described in detail with reference to the drawings showing embodiments thereof.

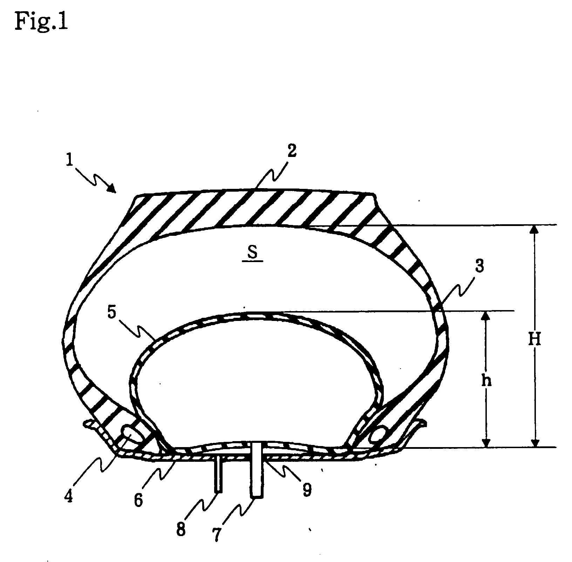

Fig. 1 is a cross-sectional view schematically showing the construction of a safety pneumatic tire, according to an embodiment of the invention. In the figure, reference numeral 1 designates a tubeless tire which is comprised of a tread 2 annularly formed, a pair of side walls 3 each disposed over an area from an end of the tread 2 to a radially internal portion of the tire, and bead portions 4 each being adjacent to the side wall and buried at a radially internal end portion of the tire. The bead portion 4 is installed in a rim 6 of the tire, and a tube 5 is built into the tire 1. The tubeless tire 1 has a large space S formed therein and defined by an external surface of the tube 5 and an internal wall of a crown portion of the tubeless tire 1. Further, both the right and left side portions of the tube 5 are each disposed so as to be in close contact with an internal surface of the bead portion 4 of the tubeless tire 1. When air is fully charged, an internal pressure $P_2$ of the tube 5 is substantially equal to or close to ($\pm 300$ kPa or less) an internal pressure $P_1$ of the space portion S.

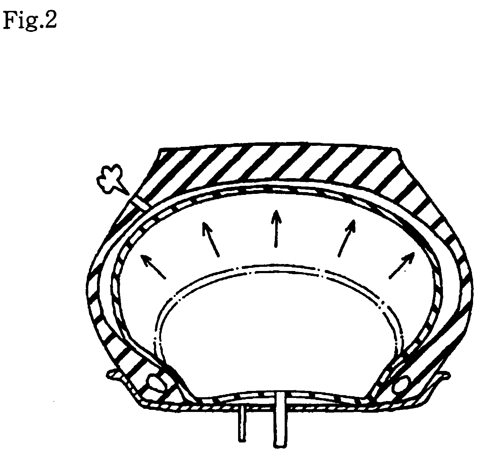

When the internal pressure $P_1$ of the space portion S drops due to an external factor, such as leakage of air within the tire, caused by tramping on a nail, a balance between the internal pressure $P_2$ of the tube 5 and the pressure $P_1$ within the tubeless tire 1 is lost, leading to increase in the internal pressure of the tube 5. As a result, as shown in Fig. 2, the tube 5 is inflated so as to fit the internal surface of the tubeless tire 1, to thereby eventually maintain the shape of the tire.

In the present invention, it is preferred that a radially cross-sectional height $\underline{h}$ of the tube 5 and a radially cross-sectional height $\underline{H}$ of the tubeless tire 1 are set in a relationship represented by the following expression when air is fully charged:

$$1/3 < h/H < 4/5$$

By virtue of this construction, an allowable space can be secured with respect to the tramping of a nail etc., and at the same time when the tire blows, the tube is inflated until it fits the internal surface of the tubeless tire, to thereby ensure the shape of the tire in a good condition.

In the present invention, the type of the tubeless tire is not specified, and accordingly it may be a radial tire or a bias tire. Further, the tubeless tire of the invention is a combination of an ordinary tubeless tire and a known tube, and therefore the materials of the tire and the tube as well as the method of manufacturing the tire and the tube should not be limited.

Charging operations of air into the tube 5 and the tubeless tire 1 are individually carried out through a valve 7 for tubes and a valve 8 for tubeless tires, respectively. These valves can be suitable applications of a conventionally used valve for tubeless tires and a conventionally used valve for tubes. In regard of this point, in addition to the essential function of keeping the internal pressure of the tube, the valve 7 for tubes serves to prevent air leakage from a valve opening in the rim, and therefore it is preferred to have a valve installing structure with hermeticity, such as a seal packing by means of grommeting 9 shown in Fig. 2, or the like.

Alternatively, it is also preferred that the tube 5 has therein a pressure regulating valve, not shown, communicating with the space portion S. In this case, air is charged only through the valve 7 for tubes, whereby air is automatically charged into the tubeless tire 1.

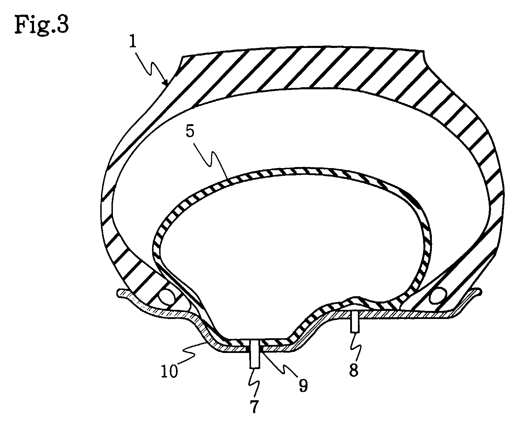

Fig. 3 is a cross-sectional view schematically showing the construction of a safety pneumatic tire, according to further embodiment of the invention. In the safety pneumatic tire, a tubeless tire 1 in which a tube 5 is built is installed in a rim 6 which has a drop portion 10. The presence of the drop portion 10 in the rim 6 allows the tubeless tire 1 to be easily installed in the rim 6.

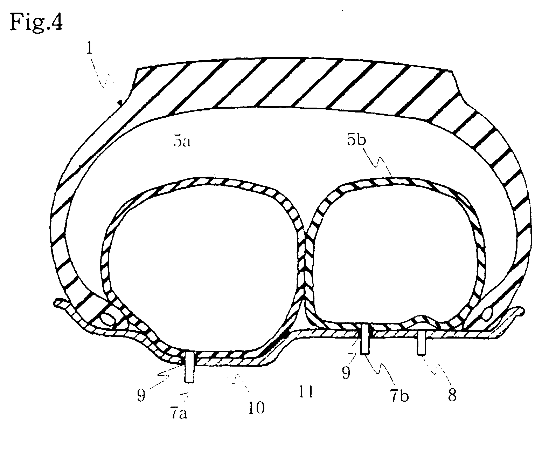

Fig. 4 is a cross-sectional view schematically showing the construction of a safety pneumatic tire, according to still further embodiment of the invention. In the safety pneumatic tire, a tubeless tire 1 in which two tubes 5a and 5b are independently built is installed in a rim 6 of the tire. The tube 5a is formed on a drop portion 10 of the rim 6 and the other tube 5b is formed on a flat portion 11 of the rim 6. The tubes 5a and 5b are independently provided with valves 7a and 7b, for tubes. Alternatively, it is also preferred to arrange a pressure regulating valve, not shown, communicating between the tube 5a and the tube 5b and to give a valve 7 for tubes to either the tube 5a or the tube 5b. Formation of two or more tubes in one tubeless tire does not lose a function as a safety tire even if any one of tubes is damaged.

EXAMPLE

Next, the safety pneumatic tire of the invention will be described with reference to an example.

The safety pneumatic tire which is like one shown in Fig. 1 was manufactured so as to satisfy the following conditions, by way of trial:

size:

TBR 315/80R22.5
internal pressure:
800 to 900 kPa
ratio of H:h assumed when air is fully charged:
160:100
valve for tubes:
with a grommet.

Then, a nail was used to pierce the tire to cause a tire blowout, and thereafter a vehicle having the tire mounted therein was allowed to actually travel. As a result, it was confirmed that good traveling could be ensured without losing the shape of the tire.

As described hereinabove, a safety pneumatic tire according to the invention is simple in construction, economical in manufacturing, and formed of an inexpensive material. In addition, the tire rarely has its weight increased, and therefore it has only a small rolling resistance which does not impair good fuel efficiency of a vehicle having the tire mounted therein. Better still, the tire of the invention can perform an excellent function as a safety tire.

While there has been described what are at present considered to be preferred embodiments of the invention, it will be understood that various modifications may be made thereto, ant it is intended that the appended claims cover all such modifications as fall within the true spirit and scope of the invention.

## Claims

1. A safety pneumatic fire including a tubeless fire having a tread annularly formed, a pair of side walls each disposed over an area from an end of said tread to a radially internal portion of said fire, and bead portions each being adjacent to said side wall and buried at a radially internal end portion of said fire and a rim in which said tubeless tire is installed, which comprising at least one tube built into said tubeless fire, a space portion being formed in said tubeless tire and defined by an external surface of said tube and an internal wall of a crown portion of said tubeless tire, when air is fully charged.

2. A safety pneumatic tire according to claim 1, wherein air is charged into said tube and said space portion such that a pneumatic pressure within said tube and a pneumatic pressure within said space portion assume substantially close values to each other.

3. A safety pneumatic fire according to claim 1 or 2, wherein said rim used has a plurality of valve openings formed therein, comprising a valve opening for said tube and a valve opening for said tubeless tire.

4. A safety pneumatic tire according to claim 1, wherein said valve opening for said tube includes a valve installing structure with hermeticity.

5. A safety pneumatic tire according to claim 1 or 2, wherein said rim used has only a valve opening for said tube, said tube having therein a pressure regulating valve communicating with said space portion.

6. A safety pneumatic tire according to claim 1, wherein a radially cross-sectional height $\underline{h}$ of said tube and a radially cross-sectional height $\underline{H}$ of said tubeless tire are set in a relationship represented by the following expression, when air is fully charged in said tubeless tire:

$$1/3 < h/H < 4/5.$$

Fig.1

Fig.2

EP 1 048 490 A2

Fig.3

7

Fig.4